# EUROPEAN PATENT SPECIFICATION

(11) **EP 2 887 647 B1**
(45) Date of publication and mention of the grant of the patent: **18.10.2017**
(21) Application number: 13382542.2
(22) Date of filing: 23.12.2013
(51) Int. Cl.: H04N 5/247, H04N 5/262, H04N 7/18, H04N 5/232, H04N 5/341

(54) **System for generating a composite video image and method for obtaining a composite video image**
System zur Erzeugung eines zusammengesetzten Videobildes und Verfahren zur Herstellung eines zusammengesetzten Videobildes
Système de génération d'une image vidéo composite et procédé pour l'obtention d'une image vidéo composite

(43) Date of publication of application: 24.06.2015
(73) Proprietor: Coherent Synchro, S.L., 08029 Barcelona (ES)
(72) Inventor: Aragones Gaya, Jose Maria, 08029 Barcelona (ES); Mari Gomez, Manuel, 08029 Barcelona (ES)
(74) Representative: Sugrañes Patentes y Marcas

(56) References cited:
- WO-A1-2013/168387
- WO-A2-2006/110584
- US-A1- 2004 252 884
- US-A1- 2005 185 047
- US-A1- 2008 253 685
- US-A1- 2010 097 444
- US-A1- 2013 155 183
- US-B1- 6 985 638
- US-B1- 8 559 757
- Anonymous: "Google Street View - Wikipedia, the free encyclopedia", , 31 December 2007 (2007-12-31), XP055299896, Retrieved from the Internet: URL:https://en.wikipedia.org/wiki/Google_S treet_View [retrieved on 2016-09-05]

## Description

### Technical Field of the Invention

The system and method for obtaining a composite video image of the present invention is of the type which allows obtaining a stable composite video image from one or several groups of video cameras located in hard-to-access areas that are prone to receiving vibrations and minor blows to perform video surveillance functions, medical functions, etc.

### Background of the Invention

Systems and methods which allow obtaining a mosaic-like composite video image from a plurality of previously adjusted cameras focusing on contiguous spaces are known, nevertheless said systems are very strict in terms of camera calibration, so any maladjustment in the camera position will affect the mosaic obtained.

This drawback makes constant maintenance of the cameras of the systems necessary to prevent maladjustments in the mosaic, further preventing the use of these systems in areas that require arranging the cameras at points that are not completely stable or are hard to access, such as masts that receive blows from wind or buoys on the sea that transmit a rocking motion to the camera.

US 2008/253685 discloses a system for generating a composite video image in a bidimensional canvas.

WO 2006/110584 discloses a system for providing an stereoscopic effect based on providing two composite video images which allow the stereoscopic effect to be achieved when simultaneously seen by a human users in each eye.

Google Street View discloses a system for generating panoramas taken from a moving vehicle in different locations and in different times.

It is therefore an object of the present invention to disclose a system and a method for obtaining a composite video image which allows obtaining a stable composite video image from a plurality of cameras even though one or several cameras of the system are maladjusted.

### Disclosure of the Invention

The system for generating a composite video image is of the type comprising a group of at least two video cameras configured for focusing on and obtaining adjacent video images over a solid area defined by a three-dimensional continuous surface, said adjacent video images overlapping in a guard zone and said video cameras being suitable for generating video information streams and sending the respective video information streams to a network; and control means configured for receiving the video information streams from the network and generating a composite video image from the video information streams by transforming the video images received for their placement on a virtual canvas which reproduces the three-dimensional continuous surface focused on by the cameras, the adjacent video images overlapping at their guard zone in the composite image formed on the virtual canvas. The system is essentially characterized in that the control means are programmed for monitoring the guard zones of each pair of overlapping adjacent transformed video images forming the composite image; determining if there is a maladjustment in the guard zone between a pair of overlapping adjacent transformed video images and moving the position of the pair of maladjusted video images by adjusting the guard zone of at least one of the maladjusted video images, and/or correcting the transformation of at least one of the maladjusted video images for maintaining the stability of the composite video image. In other words, the system for generating a composite video image comprises a group of at least two video cameras configured for focusing on overlapping adjacent areas of a solid surface and obtaining respective video images overlapping in guard zones, said cameras being suitable for transmitting the video images to a network; and control means configured for receiving the video images and generating a composite video image on a virtual canvas such that the adjacent video images overlap in the mentioned guard zones, the control means being programmed for monitoring the guard zones of the composite video image of the canvas; determining if there is a maladjustment in these guard zones; and correcting the relative position of the maladjusted video image to restore the guard zone, being able to additionally or complementarily correct the transformation of at least one of the maladjusted video images for maintaining the stability of the composite video. In this manner, the composite video image advantageously remains stable when one or more cameras are slightly maladjusted. This is particularly useful for cameras that are arranged on rather unstable substrates, such as the sea or a mast, that may introduce vibrations in parts of the composite video image and that are furthermore points that are hard for a technician to access for readjustment.

The system according to the invention comprises several groups of at least two video cameras configured for focusing on and obtaining adjacent video images over corresponding solid areas defining three-dimensional continuous tangent surfaces, the adjacent video images of each group overlapping in a guard zone and said video cameras being suitable for generating video information streams and sending the respective video information streams to a network; and control means configured for receiving the video information streams from the network and generating a composite video image for each group from the video information streams of each group by transforming the video images received from each group for their placement on a respective virtual canvas which reproduces the respective three-dimensional continuous surface focused on by the cameras, the adjacent video images overlapping at their guard zone in the composite image and the virtual canvases of each group being provided with transition points.

The system further comprises display means for displaying the composite image generated by the control means and navigation means for navigating over said composite video image. Said display means can be both a local and remote display screen and the navigation means allow navigating through the generated composite video image, showing a section of the generated composite video image in the display means. The navigation means and remote display means can advantageously act on the control means by sending the coordinates that they wish to receive, for example, so that the control means only transmit said section of the composite video image to the display means, which thus allows navigating and showing said section of the composite video image in devices with low computing power, such as mobile devices, for example.

The navigation means for navigating over said composite video image are suitable for skipping between virtual canvases when a transition point is reached. This allows navigating between the composite video image of a group of video cameras and another video image of a group of video cameras. For example, a composite video image of a group of video cameras could be the outside of a house and the other composite video images would be the inside of said house, the transition point between canvases being established in the areas of passage between rooms, such as doors and windows, for example.

The method for obtaining a composite video image formed from video images from a group of at least two video cameras, although not forming part of the invention as claimed, comprises the steps of determining a solid area in the space defined by a three-dimensional continuous surface; obtaining adjacent video images focusing on said solid area; transmitting video information streams with the video images from each of the video cameras over a network; receiving the video information streams with the video images in control means; transforming the video images received in said control means for their placement on a virtual canvas which reproduces the respective three-dimensional continuous surface focused on by the cameras; arranging the transformed video images overlapping at their guard zone, forming the composite image on the virtual canvas; monitoring the guard zone of each pair of overlapping adjacent transformed video images forming the composite image; determining if there is a maladjustment in the guard zone between a pair of overlapping adjacent transformed video images; moving the position of the pair of maladjusted video images by adjusting the guard zone of at least one of the maladjusted video images, and/or correcting the transformation of at least one of the maladjusted video images for maintaining the stability of the composite video image. In this manner, slight maladjustments in the camera position will not affect the resulting composite video image.

The method further comprises the steps of displaying the composite video image generated by the control means in display means such as a display screen, and navigating through said image by navigation means such as a keyboard or a joystick, for example.

In another variant of interest, with the virtual canvas being provided with transition points with other virtual canvases, the navigation means allow skipping between virtual canvases when said transition point is reached, which allows navigating between associated virtual canvases.

It is also disclosed that if in the step of moving the position of the pair of maladjusted video images by adjusting the guard zone of at least one of the maladjusted video images, and/or correcting the transformation of at least one of the maladjusted video images for maintaining the integrity of the composite video image, the guard zone between a pair of overlapping adjacent transformed video images is smaller than a predetermined threshold, an alarm signal on the camera or cameras causing the maladjustment is activated, which allows manually re-establishing the camera position.

For example, said predetermined threshold of the guard zone can be at least 1 pixel, being 10 pixels in one embodiment, which allows withstanding minor vibrations of cameras arranged on top on a mast due to the effect of wind.

It is also disclosed that if in the step of moving the position of the pair of maladjusted video images by adjusting the guard zone of at least one of the maladjusted video images, and/or correcting the transformation of at least one of the maladjusted video images for maintaining the integrity of the composite video image, the resolution of at least one of the overlapping adjacent transformed video images is smaller than a predetermined threshold for said video image because the image has been transformed, losing resolution, for example, an alarm signal on the camera or cameras causing the maladjustment is activated. For example, said predetermined threshold can typically be established as smaller than 12 pixels per centimeter in video surveillance applications.

The alarm signal triggers the action of sending a repositioning signal to the camera or cameras causing the maladjustment with instructions for correcting the maladjustment. Said instructions can go directly to the camera if the camera supports the remote operation thereof for re-establishing the composite image or to a technician to perform relevant maintenance operations for re-establishing the initial camera position.

### Brief Description of the Drawings

To complement the description that is being made and for the purpose of aiding to better understand the features of the invention, a set of drawings is attached to the present specification in which the following has been depicted with an illustrative and non-limiting character:
Figure 1 shows a section of the configuration of the system of the present invention the solid area of which is a straight plane;
Figure 2 shows the detail of the overlap in the guard zone of two of the cameras of the configuration of Figure 1;
Figure 3 shows the configuration of the device of Figure 1 in a perspective view;
Figure 4 shows a diagram of connections of a device according to the present invention;
Figure 5a shows a canvas with all the adjusted video images;
Figure 5b shows a canvas with a maladjusted video image;
Figure 6 shows a section of the configuration of the device of the present invention the solid area of which is a curved plane; and
Figure 7 shows another embodiment variant with two groups of video cameras.

### Detailed Description of the Drawings

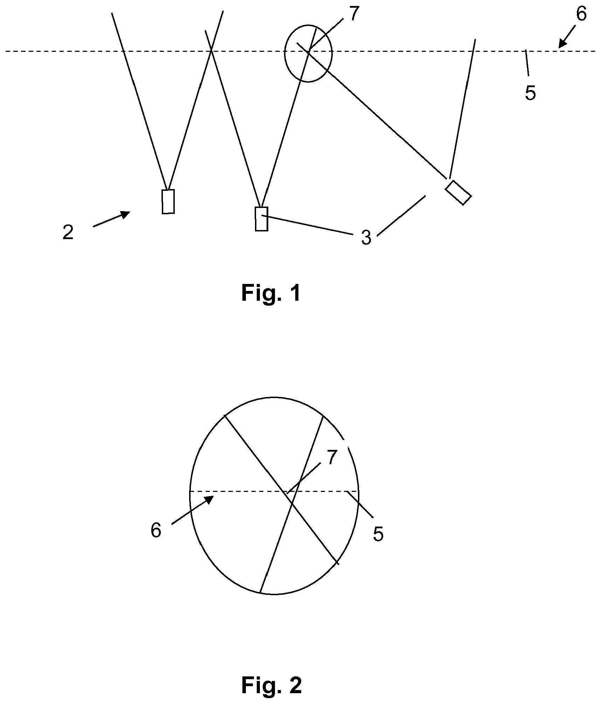

Figure 1 shows part of a group 2 of video cameras 3 for generating a composite video image according to the system 1 of the present invention. As can be seen, Figure 1 shows three video cameras 3 corresponding to a part of the group. Particularly, the video cameras 3 are part of a group of nine video cameras 3 arranged in three rows and three columns, to illustrate a simple embodiment variant of the system 1 of the present invention. Naturally, in other embodiment variants and as deemed appropriate in each installation, the group of cameras 3 could be formed by several cameras 3 arranged at different levels.

The video cameras 3 are configured for focusing on and obtaining adjacent video images 4 over a solid area 5 defined by a three-dimensional continuous surface 6, in this case a straight plane, although in other embodiment variants said three-dimensional continuous surface could have any other shape, being able to be curved, cylindrical or to resemble the inside of a sphere, even being a complete sphere, for example. Naturally, it is also envisaged that the three-dimensional continuous surface 6 is irregular.

As can be seen in the detail of Figure 1 shown in Figure 2, the adjacent video images 4 captured by the cameras 3 overlap in a guard zone 7. Said guard zone 7 will advantageously allow correcting the composite video image generated from the video images 4 of the different cameras 3, as will be detailed below.

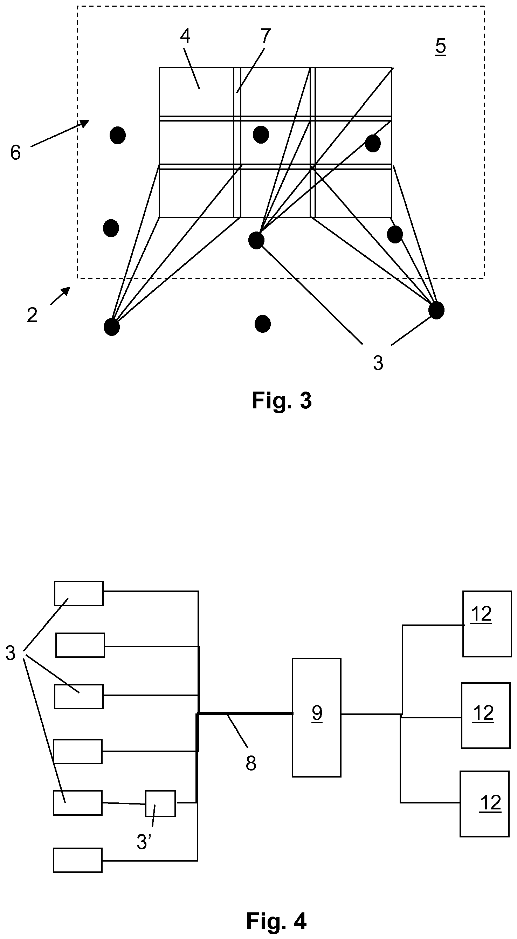

Figure 4 shows a complete view of the group of video cameras 3 where it can be seen that nine cameras 3 are configured for focusing on and obtaining nine adjacent video images 4 over a solid area 5. For greater ease of understanding, only the aperture of two of the cameras 3 has been highlighted. Even though all the cameras 3 have the same aperture in the depicted variant, it is envisaged that different type of cameras 3 can be used, although they must preferably be previously configured and their position, aperture and focus direction must be known for producing the composite video image, as will be seen below. It is envisaged that there is a configuration program which allows entering information relating to the cameras 3 of the system 1, such as their position, aperture and focus direction. Furthermore, cameras with a different resolution and even some cameras which are not adjacent could also be used. It is envisaged that cameras 3 with a higher resolution are used to enable viewing the composite video image that will be generated and to enable enlarging it in the areas of space that are considered key for the application without losing too much resolution when performing a digital zoom.

As shown in Figure 4, the cameras 3 of the system 1 are suitable for generating video information streams and sending the respective video information streams to a network 8. Said network 8 can be an IP network, to which the cameras 3 can be connected if they have a network connection or the cameras can be connected to the network 8 through an adaptor 3' converting the analog signal of the camera into a set of packets that will be injected into the network 8. As can be seen, the system 1 further comprises control means 9, which can be a computer, connected to said network 8 and configured for receiving the video information streams from the network and generating a mosaic-like composite video image 10, also known as video stitching, from the video information streams, transforming the video images 4 received for their placement on a virtual canvas 11 which reproduces the three-dimensional continuous surface focused on by the cameras 3. The transformation would comprise both rotating and enlarging or compressing the sides of the image for correcting the perspective, adapting it to that which an observer would see perpendicular to the three-dimensional continuous surface forming the solid area 5. Said placement of the transformed video images 4 could be performed manually by an operator or automatically based on the three-dimensional coordinates obtained from the pre-established position, aperture and focus direction for each of the video cameras 3 of the group, if this information is available. Naturally, alignment elements, such as visible point source emitters such as a laser, which emit luminous points inside or outside the visible spectrum and can be captured by the cameras 3, could be incorporated in the groups such that they will be located in the guard zones and will aid in aligning the video images for forming the composite video image 10. Naturally, it is envisaged that the control means 9 have sufficient processing capacity to prevent delays in the generation of the composite video image 10. Although it is envisaged that the different video images 4 can be automatically aligned by determining the guard zones 7 in which adjacent images overlap or based on the previously entered information concerning camera position, aperture and focus direction, it is naturally envisaged that the alignment can be adjusted manually. It would also be possible to start from a position where the arrangement of the video images 4 on the virtual canvas 11 is manually adjusted by an operator, until the control means detect their overlap in the guard zones 7, both by processing the entire guard zone 7 or by means of locating one of the alignment elements described above. In this manner, it is possible to correct the colorimetry and brightness of the video images 4 provided by adjacent cameras 3 to prevent the separation point between them from becoming evident.

Said composite video image 10 generated by the control means 9 can serve devices 12 connected to the same network 8 or to another network provided with display means for displaying the composite image 10 generated by the control means 9.

Said devices 12 can in turn process the composite video image 10 generated by the control means 9 for selecting sections of interest and navigating through the composite video image 10, for example, moving the section 12 of interest over said composite video image 10 to perform virtual navigation over the canvas 11 on which the composite video image 10 is arranged, showing a part thereof. Advantageously, navigating with a perpendicular view over the three-dimensional continuous surface 6 focused on by the cameras 3 can thus be achieved even though the cameras 3 are not arranged perpendicular to the three-dimensional continuous surface 6. It is envisaged that since not all the devices 12 connected to the network 8 allow rapidly processing the entire composite video image 10, said devices 12 allow indicating to the control means 9 the section of the composite video image 10 to be viewed. Naturally, both the devices 12 processing the composite video image 10 and those requesting sections 12 of said composite video image 10 from the control means can be provided with navigation means that allow navigating over said composite video image 10. Said navigation means can be manual means such as keys or joysticks, or automatic means such as programs which are programmed for moving the sections 12 of said composite video image 10 to be shown, for example. It must be highlighted that the projection that will be seen of the section 12 of composite video image 10 will always be perpendicular, so the image that is ultimately seen will not be deformed.

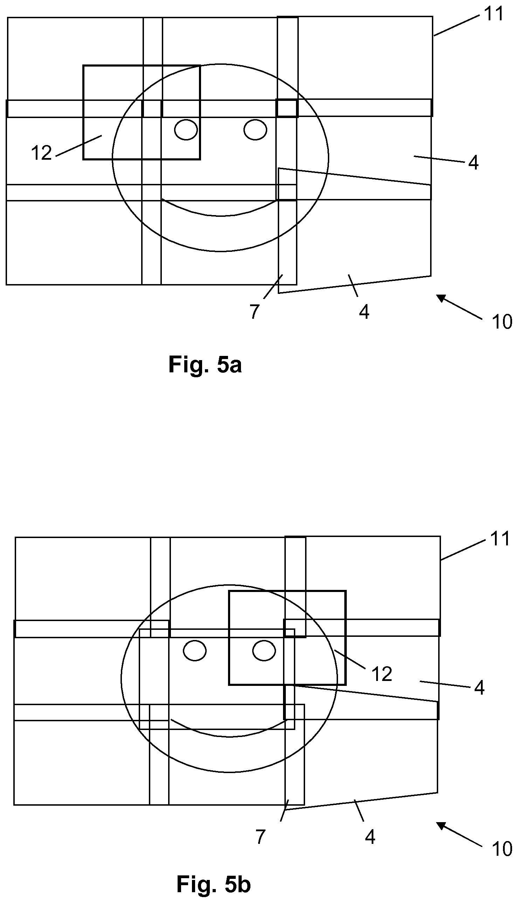

An example of the composite video image 10 generated by the group of cameras of Figure 3 is shown in Figure 5a; it can be seen in said composite video image 10 that the video images 4 captured by the different cameras 3 are arranged adjacent to one another and overlapping in their guard zone 7 in the composite image formed on the virtual canvas 11. Groups of up to four video images 4 overlapping in their guard zone 7 can be seen. It is envisaged that in other embodiment variants there may be even more video images 4 overlapping in a guard zone 7. To prevent slight movements of the cameras 3 from destabilizing the generated composite video image 10, as a result of wind or minor vibrations or of arranging one or more cameras 3 on a rather unstable substrate such as the surface of the sea with a constant rocking motion, the control means 9 are programmed for monitoring the guard zones 7 of each pair of overlapping adjacent transformed video images 4 forming the composite video image 10 and determining if there is a maladjustment in the guard zone 7 between a pair of overlapping adjacent transformed video images 4. If a maladjustment is detected due, for example, to the fact that a camera 3 has been moved or has fallen slightly or that the camera is simply performing a rocking movement due to the wind or the sea, the control means 9 will move the position of the pair of maladjusted video images 4, for example in the manner shown in Figure 5b, adjusting, i.e., reducing if necessary, the guard zone 7 of at least one of the maladjusted video images 4 for keeping the composite video image 10 stable. The transformation of at least one of the maladjusted video images 4 could complementarily or optionally be corrected for maintaining the stability of the composite video image 10. It is envisaged that said self-correction could be performed periodically, configuring the time between periods as needed. Naturally, the entire guard zone 7 or specific sections can be monitored to prevent consuming too many resources of the control means 9. The system 1 thus allows viewing the composite video image 10 in the form of a mosaic even when one or more cameras 3 are maladjusted.

Although slight movements of the cameras 3 may be satisfactorily overcome without the composite video image 10 being altered, it must be taken into account that if during the step of moving the position of the maladjusted video images 4 by adjusting the guard zone 7 of the maladjusted video images 4, and/or correcting the transformation of the maladjusted video images 4 for maintaining the integrity of the composite video image 10, the guard zone 7 between a pair of overlapping adjacent transformed video images is smaller than a predetermined threshold, an alarm signal on the camera 3 or cameras 3 causing the maladjustment will be activated. Said predetermined minimum threshold of the guard zone 7 must be preset, being recommendable for it to be at least 1 pixel and normally 10 pixels. Naturally, said predetermined minimum threshold of the guard zone 7 must be adjusted according to the needs of the system 1 and its failure tolerance.

In the step of moving the position of maladjusted video images 4 by adjusting the guard zone 7 of the maladjusted video images 4, and/or correcting the transformation of the maladjusted video images 4 for maintaining the integrity of the composite video image 10, the resolution of at least one of the overlapping adjacent transformed video images must also be controlled so that it is greater than a predetermined threshold for said video image 4, otherwise an alarm signal on the camera 3 or cameras 3 causing the maladjustment can also be activated. Said predetermined threshold could typically be established at 12 pixels per centimeter which would be considered sufficient for identifying a face in a video surveillance application, although the configuration thereof will depend on the function performed by the system 1.

It is envisaged that the alarm signal triggers sending a repositioning signal to the camera 3 or cameras 3 causing the maladjustment with instructions for correcting the maladjustment or simply of a notice alerting a technician to repositions the camera 3 causing the maladjustment.

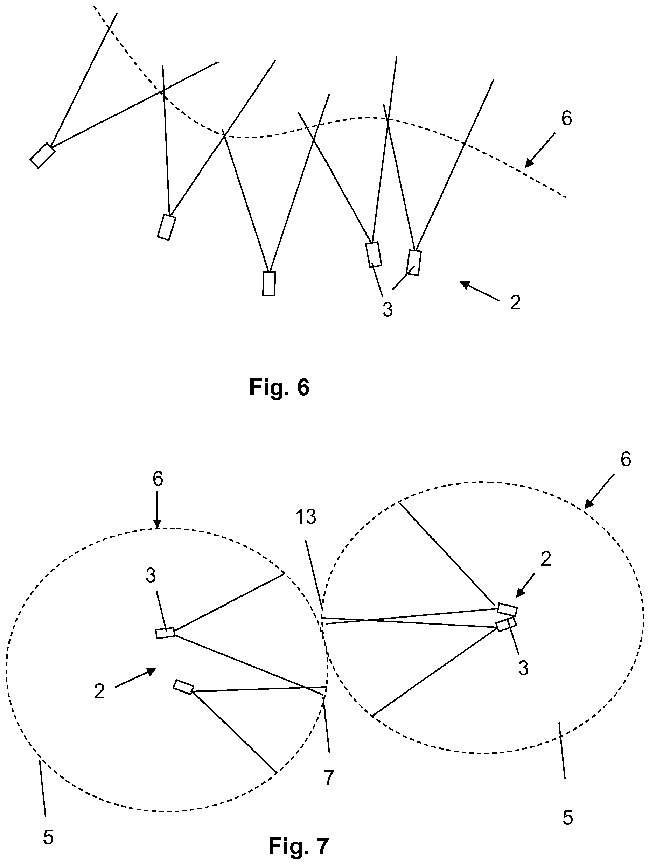

Figure 6 shows another embodiment variant in which the group of video cameras 3 of the system 1 are configured for focusing on and obtaining the adjacent video images 4 over a solid area 5 which in this case defines a three-dimensional curved continuous surface. In this case it is envisaged that the composite video image 10 is generated on a respective virtual canvas 11 which reproduces the respective three-dimensional curved continuous surface focused on by the cameras 3.

Figure 7 shows another embodiment variant which, instead of having a single group 2 of cameras 3, comprises two groups 2 of video cameras 3. The video cameras 3 of each group 5, 5a will be configured for focusing on and obtaining adjacent video images 4 over their respective solid areas 5, 5a defining three-dimensional continuous tangent surfaces 6, 6a. Similarly to the variants described above, the adjacent video images of each group will overlap in respective guard zones 7 and the video cameras 3 of each of the groups 2 will be suitable for generating video information streams and sending the respective video information streams to a network 8 similarly to the manner described above.

In this case, the control means 9 will be configured for receiving the video information streams from the network 8 and generating two composite video images 10, one for each group, from the video information streams of each group by transforming the video images received from each group for their placement on a respective virtual canvas 11 which reproduces the respective three-dimensional continuous surface focused on by the cameras 3 from the three-dimensional coordinates obtained from the pre-established position, aperture and focus direction for each of the video cameras, the adjacent video images 3 also overlapping at their guard zone in the composite image and the virtual canvases 11 of each group being provided with transition points 13. Therefore, when navigating using the navigation means provided in the system, skipping between virtual canvases will be triggered upon reaching one of the transition points of the canvas 11. Naturally, the skip cannot be automatic, rather the display means can, for example, alert the user by means of a visual alert, an acoustic alert or an alert of any type, which is located on a transition point 13 and he/she can view and navigate over the adjacent composite video image. This can be of special interest when different rooms separated by doors are to be put under surveillance, for example, in which different groups 2 of cameras 3 can be established for each room, establishing the transition points in the position of the areas of passage between rooms, doors, windows, corridors, etc., which will allow a security guard navigating over the composite video image 10 of one of the groups 2 the transition to the composite video images of the adjacent groups.

## Claims

1. A system (1) for generating a composite video image, comprising:
several groups (2) of at least two video cameras (3) configured for focusing on and obtaining adjacent video images (4) over corresponding solid areas (5) defining three-dimensional continuous tangent surfaces (6) determining transition points (13), the adjacent video images of each group overlapping in a guard zone (7) and said video cameras being suitable for generating video information streams and sending the respective video information streams to a network (8); and control means (9) configured for receiving the video information streams from the network and generating a composite video image (10) for each group from the video information streams of each group by transforming the video images received from each group for their placement on a respective virtual canvas (11) which reproduces the respective three-dimensional continuous surface focused on by the cameras, the adjacent video images overlapping at their guard zone in the composite image;
the control means being programmed for monitoring the guard zones of each pair of overlapping adjacent transformed video images forming the composite image; the control means also being programmed for determining if there is a maladjustment in the guard zone between a pair of overlapping adjacent transformed video images and the control means also being programmed for moving the position of the pair of maladjusted video images by adjusting the guard zone of at least one of the maladjusted video images, and/or correcting the transformation of at least one of the maladjusted video images for maintaining the stability of the composite video image;
the virtual canvases of each group being provided with transition points for manually skipping between canvases;
the system further comprising display means for displaying the composite image generated by the control means and navigation means for navigating over said composite video image; and
the navigation means for navigating over said composite video image being suitable for skipping between virtual canvases when a transition point is reached.

## Patentansprüche

1. System (1) zur Erzeugung eines zusammengesetzten Videobildes umfassend:
mehrere Gruppen (2) aus mindestens zwei Videokameras (3), welche für das Scharfstellen und das Erhalten von benachbarten Videobildern (4) über entsprechende massive Bereiche (5) ausgebildet sind, unter Definierung dreidimensionaler durchgehenden tangentialen Oberflächen (6), welche Übergangspunkte (13) bestimmen, wobei sich die benachbarten Videobilder jeder Gruppe in einer Schutzzone (7) überlappen und wobei die genannten Videokameras zur Erzeugung von Videoinformationsströmen und zum Senden der jeweiligen Videoinformationsströme zu einem Netzwerk (8) geeignet sind; und Steuermittel (9), welche dazu ausgebildet sind, die Videoinformationsströme aus dem Netzwerk zu empfangen und ein zusammengesetztes Videobild (10) für jede Gruppe aus den Videoinformationsströmen jeder Gruppe zu erzeugen, mittels der Umwandlung der aus jeder Gruppe empfangenen Videobilder für deren Platzierung auf einer jeweiligen virtuellen Leinwand (11), welche die jeweilige, von den Kameras scharfgestellte dreidimensionale durchgehende Oberfläche wiedergibt, wobei sich die benachbarten Videobilder im zusammengesetzten Bild an deren Schutzzone überlappen;
wobei die Steuermittel dazu programmiert sind, die Schutzzonen jedes Paares von sich überlappenden benachbarten umgewandelten Videobildern, welche das zusammengesetzte Bild bilden, zu überwachen; wobei die Steuermittel auch dazu programmiert sind, zu bestimmen ob es eine Fehlanpassung in der Schutzzone zwischen einem Paar von sich überlappenden benachbarten umgewandelten Videobildern gibt und wobei die Steuermittel auch dazu programmiert sind, die Stellung des Paares von fehlangepassten Videobildern zu bewegen, mittels der Einstellung der Schutzzone mindestens eines der fehlangepassten Videobilder, und/oder des Korrigierens der Umwandlung mindestens eines der fehlangepassten Videobilder zur Aufrechterhaltung der Stabilität des zusammengesetzten Videobildes;
wobei die virtuellen Leinwände jeder Gruppe mit Übergangspunkte für das manuelle Wechseln zwischen Leinwänden versehen sind;
wobei das System zusätzlich Anzeigemittel für das Anzeigen des zusammengesetzten, von den Steuermitteln erzeugten Bildes und Navigationsmittel für das Navigieren über das zusammengesetzte Videobild umfasst; und
wobei die Navigationsmittel für das Navigieren über das genannte zusammengesetzte Videobild dafür geeignet sind, zwischen virtuellen Leinwänden zu wechseln, wenn ein Übergangspunkt erreicht worden ist.

## Revendications

1. Système (1) de génération d'une image vidéo composite, comprenant
plusieurs groupes (2) d'au moins deux caméras vidéos (4) configurées pour se centrer sur, et obtenir des images vidéos attenantes (4) sur, des zones solides correspondantes (5) définissant des surfaces tridimensionnelles continues tangentes (6) déterminant des points de transition (13), les images vidéos attenantes de chaque groupe se chevauchant au niveau d'une zone de protection (7) et lesdites caméras vidéos étant appropriées pour générer des flux d'information vidéo et envoyer les flux d'information vidéo respectifs à un réseau (8) ; et des moyens de commande (9) configurés pour recevoir les flux d'information vidéo du réseau et générer une image vidéo composite (10) pour chaque groupe des flux d'information vidéo de chaque groupe en transformant les images vidéos reçues de chaque groupe pour leur mise en place sur une toile virtuelle respective (11) qui reproduit la surface continue tridimensionnelle respective sur laquelle sont centrées les caméras, les images vidéos attenantes se chevauchant au niveau de leur zone de protection dans l'image composite ;
les moyens de commande étant programmés pour surveiller les zones de protection de chaque paire d'images vidéos transformées attenantes de chevauchement formant l'image composite ; les moyens de commande étant également programmés pour déterminer s'il y a un mauvais réglage dans la zone de protection entre une paire d'images vidéos transformées attenantes de chevauchement et les moyens de commande étant également programmés pour déplacer la position de la paire d'images vidéos mal réglées par le biais du réglage de la zone de protection d'au moins une des images vidéos mal réglées, et/ou la correction de la transformation d'au moins une des images vidéos mal réglées pour maintenir la stabilité de l'image vidéo composite ;
les toiles virtuelles de chaque groupe étant pourvues de points de transition pour passer manuellement d'une toile à une autre ;
le système comprenant en outre des moyens d'affichage pour afficher l'image composite générée par les moyens de commande et des moyens de navigation pour naviguer sur ladite image vidéo composite ; et
les moyens de navigation pour naviguer sur ladite image vidéo composite étant appropriés pour passer d'une toile virtuelle à une autre lorsque le point de transition est atteint.
